# EUROPÄISCHE PATENTSCHRIFT

(11) **EP 1 492 247 B1**
(45) Veröffentlichungstag und Bekanntmachung des Hinweises auf die Patenterteilung: **24.09.2008**
(21) Anmeldenummer: 03360076.8
(22) Anmeldetag: 25.06.2003
(51) Int. Cl.: H04B 3/50, H04B 3/32, H04M 19/00

(54) **Störfeste Eingangsstufe einer Zweidrahtleitung**
Interference proof input stage of a two wire line
Etage d'entrée blindé contre les interférences pour une ligne à deux fils

(43) Veröffentlichungstag der Anmeldung: 29.12.2004
(73) Patentinhaber: Alcatel Lucent, 75008 Paris (FR)
(72) Erfinder: Telefont, Heinz, 3500 Krems/Egelsee (AT)
(74) Vertreter: Kohler Schmid Möbus

(56) Entgegenhaltungen:
- EP-A- 0 517 321
- US-A- 4 701 947
- PATENT ABSTRACTS OF JAPAN vol. 015, no. 299 (E-1095), 30. Juli 1991 (1991-07-30) & JP 03 106288 A (FUJITSU LTD), 2. Mai 1991 (1991-05-02)

## Beschreibung

### Stand der Technik

Die Erfindung betrifft eine Schaltung, insbesondere eine Eingangsstufe einer Zweidrahtleitung, die mindestens einen ersten und einen zweiten Kontakt zum Anschluss einer Zweidrahtleitung aufweist, wobei der erste Kontakt mit einer Spannungsversorgung verbunden ist und die Schaltung einen Ausgangskontakt für ein aufbereitetes digitalisiertes Ausgangssignal aufweist.

Eine Datenübertragung über Zweidrahtleitungen wird beispielsweise in der Eisenbahnsignalisierung verwendet. Es gibt jedoch auch andere Anwendungsbereiche, wie die Signalisierung bei der Überwachung eines Werkgeländes oder bei der Objektüberwachung. Häufig wird eine Stromschleifensignalisierung verwendet, wobei typischerweise Schleifenströme im Bereich 4 - 20 mA eingesetzt werden.

Bei langen Leitungen, insbesondere von einer Länge über 10 km, wie sie im Eisenbahnbereich vorkommen können, wird die Koppelkapazität von Zweidrahtleitungspaaren, beispielsweise in einem Vierpolkabel, derart groß, dass eine gegenseitige Beeinflussung der Leitungspaare eintreten kann. Wird in einer Zweidrahtleitung eine Wechselspannung übertragen, kann diese Wechselspannung aufgrund der Koppelkapazität, die je nach Kabelausführung 40 - 150 nF/km sein kann, in die anderen Zweidrahtleitungen eingekoppelt werden. Die eingekoppelte Wechselspannung kann zu unerwünschten Signalwechseln einer an eine Zweidrahtleitung, in die die Wechselspannung eingekoppelt wird, angeschlossenen Schaltung führen, insbesondere, wenn die Zweidrahtleitung für eine Stromschleifensignalisierung verwendet wird.

Das Dokument US-A-4 701 947 offenbart eine Störfrequenzfiltereinrichtung und das Dokument EP-A-0 517 321 eine Spannungsanpassungsschaltung.

### Aufgabe der Erfindung

Aufgabe der Erfindung ist es, eine Schaltung bereit zu stellen, mit der der störende Einfluss einer eingekoppelten Wechselspannug sicher vermieden wird.

### Gegenstand der Erfindung

Gelöst wird diese Aufgabe erfindungsgemäß durch eine Schaltung der eingangs genannten Art, bei der zwischen den Kontakten eine Potentialverschiebungseinrichtung zur Potentialerhöhung des Mittelwerts einer in die Zweidrahtleitung eingekoppelten Wechselspannung vorgesehen ist.

Die Potentialverschiebung durch die Potentialverschiebungseinrichtung bewirkt, dass kein Strom von einer in der Schaltung angeordneten Stromquelle gezogen wird und folglich ein schaltendes Element, das eine Änderung des Ausgangssignals bewirkt, nicht schaltet. Die Potentialverschiebungseinrichtung kann mit Standardbauteilen realisiert werden, so dass eine große Freiheit bei der Wahl der Bauteile besteht. Die Potentialverschiebungseinrichtung kann je nach zu erwartender eingekoppelter Wechselspannung oder Schaltungsauslegung adaptiert werden. Die Potentialverschiebungseinrichtung wirkt in erster Linie, wenn die angeschlossene Zweidrahtleitung senderseitig offen ist, d.h. nicht kurzgeschlossen ist. Die einfachste Anordnung der Potentialverschiebungseinrichtung ist zwischen den Kontakten innerhalb der Schaltung. Sie könnte jedoch auch außerhalb der Schaltung zwischen den Leitungen der Zweidrahtleitung angeordnet sein. Durch die Potentialverschiebungseinrichtung wird das Potential beispielsweise um etwa 100 V verschoben. Der zweite Kontakt kann mit Masse verbunden sein. Der erste Kontakt ist mittelbar oder unmittelbar mit der Versorgungsspannung verbunden.

Bei einer bevorzugten Ausführungsform ist die Potentialverschiebungseinrichtung als Diode oder Transistor ausgebildet. Durch diese Maßnahme kann die Potentialerhöhungseinrichtung auf besonders einfache Art und Weise realisiert werden. Bei senderseitig kurzgeschlossener Zweidrahtleitung wirkt sich die Diode nicht auf die Schaltung, insbesondere auf das Ausgangssignal aus. Sie verhindert jedoch bei offener Zweidrahtleitung zuverlässig ein fehlerhaftes Ausgangssignal aufgrund einer eingekoppelten Wechselspannung. Bei Verwendung eines Transistors müsste dieser entsprechend beschaltet bzw. angesteuert werden, um eine Potentialverschiebung der eingekoppelten Wechselspannung zu bewirken.

Besonders bevorzugt ist es, wenn die Schaltung ein mit dem Ausgangskontakt in Verbindung stehendes Schaltelement aufweist. Dies ermöglicht in Verbindung mit der angeschlossenen Zweidrahtleitung eine Stromschleifensignalisierung. Dabei stellt die Schaltung die Empfängerseite dar. Ist die Zweidrahtleitung senderseitig nicht kurzgeschlossen, ist das Schaltelement in einem ersten Zustand. Wird die Zweidrahtleitung senderseitig kurz geschlossen, fließt ein Strom von einer Stromquelle über das Schaltelement, durch die kurzgeschlossene Zweidrahtleitung und wieder zurück zur Schaltung. Dabei wird der Zustand des Schaltelements geändert, so dass sich der Signalpegel an seinem Ausgang ändert. Dies bedeutet, dass der Schleifenstrom nur von dem Empfänger bereit gestellt wird.

Um eine Potentialtrennung der Eingänge und des Ausgangs des Schaltelements sicher zu stellen, ist das Schaltelement vorzugsweise als Optokoppler, Opto-Feldeffekttransistor, Opto-Thyristor oder Opto-Triac ausgebildet. Wenn ein Optoelement verwendet wird, kann die Spannungsquelle erdfrei (massefrei, floating) sein oder an einem beliebigen Punkt auf Masse gelegt werden. Dies bedeutet insbesondere, dass der zweite Kontakt mit Masse verbunden sein kann, jedoch nicht mit Masse verbunden sein muss. Es kann grundsätzlich der positive oder negative Pol, bzw. der damit verbundene Kontakt, geerdet werden.

Die Schaltung kann geschützt werden, indem die eingekoppelte Wechselspannung sicher von dem Schaltelement und der restlichen Schaltung fern gehalten wird. Dies kann auf besonders einfache Art und Weise durch eine zweite Diode geschehen, die zwischen dem ersten Kontakt und dem Schaltelement angeordnet ist. Diese Diode dient insbesondere dem Schutz der Elektronik der Zweidrahtleitungseingangsstufe.

Bei Spitzen der eingekoppelten Wechselspannung kann die Schaltung aktiv werden, insbesondere kann sich der Schaltzustand des Schaltelements ändern. Um zu verhindern, dass dadurch das Ausgangssignal der Schaltung beeinflusst wird, kann zwischen dem Schaltelement und dem Ausgangskontakt ein Filter vorgesehen sein. Ist die Schaltung so ausgelegt, dass ein Ändern des Schaltzustands des Schaltelements insbesondere bei negativen Spannungsspitzen der eingekoppelten Wechselspannung zu erwarten ist, ist das Filter vorteilhafterweise als Tiefpassfilter ausgebildet.

Vorzugsweise wird das Ausgangssignal durch einen Inverter, der als Schmitt-Trigger ausgebildet sein kann, bereit gestellt. Dies stellt sicher, dass ein digitalisiertes Ausgangssignal vorliegt. Der Inverter kann dem Filter nachgeschaltet sein.

Die Aufgabe wird außerdem gelöst durch ein Verfahren zum störfesten Übertragen von Signalen über eine Zweidrahtleitung, bei dem das Potential des Mittelwerts einer in die Zweidrahtleitung eingekoppelten, das Ausgangssignal einer mit der Zweidrahtleitung verbundenen Schaltung störenden Wechselspannung auf ein anderes Potential, insbesondere höheres Potential verschoben wird, derart dass das Ausgangssignal der Schaltung bei eingekoppelter Störwechselspannung unverändert bleibt. Je nach Auslegung der Schaltung kann das Potential in positive oder negative Richtung verschoben werden. Von der Schaltungsauslegung und/oder der Versorgungsspannung der Schaltung hängt es ab, wie weit das Potential verschoben werden muss, um den Einfluss von störenden eingekoppelten Wechselspannungen zu vermeiden. Eingekoppelte Wechselspannungen sind insbesondere dann ein Problem, wenn die Zweidrahtleitung senderseitig offen, d.h. nicht kurz geschlossen ist. Das erfindungsgemäße Verfahren bewirkt daher eine Vermeidung des Einflusses der eingekoppelten Wechselspannung bei offener Zweidrahtleitung. Bei kurzgeschlossener Zweidrahtleitung wirkt sich die eingekoppelte Wechselspannung in der Regel ohnehin nicht auf das Ausgangssignal der Schaltung aus.

Es kann vorgesehen sein, das Potential der Wechselspannung zu verschieben und dabei die Wirkung der Gleichrichtung einer Wechselspannung zu erzielen.

Dies kann insbesondere durch eine Diode, die zwischen den Leitern der Zweidrahtleitung oder zwischen den mit den Leitungen verbundene Kontakten der Schaltung angeordnet ist, realisiert werden.

Bei einer bevorzugten Verfahrensvariante ist vorgesehen, dass die potentialverschobene Wechselspannung von der Schaltung entkoppelt wird. Durch diese Maßnahme wird die Elektronik der Schaltung geschützt.

Weitere Merkmale und Vorteile der Erfindung ergeben sich aus der nachfolgenden Beschreibung eines Ausführungsbeispiels der Erfindung, anhand der Figuren der Zeichnung, die erfindungswesentliche Einzelheiten zeigen, und aus den Ansprüchen. Die einzelnen Merkmale können je einzeln für sich oder zu mehreren in beliebiger Kombination bei einer Variante der Erfindung verwirklicht sein.

### Zeichnung

Ein Ausführungsbeispiel der erfindungsgemäßen Schaltung ist in der schematischen Zeichnung dargestellt und wird in der nachfolgenden Beschreibung erläutert. Es zeigt:
- **Fig. 1**: eine Anordnung für eine Stromschleifensignalisierung;
- **Fig. 2**: ein Simulationsergebnis ohne Potentialverschiebung der eingekoppelten Wechselspannung;
- **Fig. 3**: ein Simulationsergebnis mit Potentialverschiebung der eingekoppelten Wechselspannung.

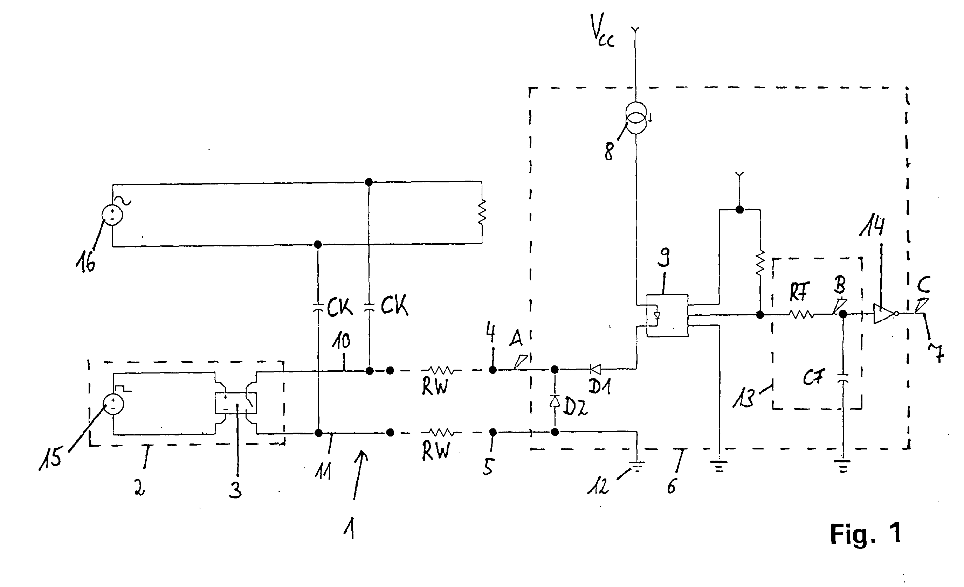

Eine Anordnung für eine Stromschleifensignalisierung ist in der **Fig. 1** dargestellt. Eine Zweidrahtleitung **1** ist einenends mit einem in einem Sender **2** angeordneten als Schaltrelais ausgebildeten Schaltelement **3** verbunden und anderenends mit einem ersten und zweiten Kontakt **4, 5** einer als Eingangsstufe einer Zweidrahtleitung ausgebildeten Schaltung **6**, die über einen Ausgangskontakt **7** ein digitalisiertes Ausgangssignal ausgibt. In der Schaltung **6** ist eine Stromquelle **8** an eine Spannungsversorgung V_{cc} angeschlossen, die im Ausführungsbeispiels 24 V liefert. Die Stromquelle liefert einen konstanten Strom von 5 mA. Der Stromquelle 8 nachgeschaltet ist ein als Optokoppler ausgebildetes Schaltelement **9**, das mit dem ersten Kontakt 4 verbunden ist. Zwischen dem ersten Kontakt 4 und dem zweiten Kontakt 5 ist eine als Diode **D2** ausgebildete Potentialverschiebungseinrichtung angeordnet. Zwischen dem ersten Kontakt 4 und dem Schaltelement 9 ist eine zweite Diode **D1** zwischengeschaltet. Bei der Stromschleifensignalisierung ist vorgesehen, dass bei geschlossener Zweidrahtleitung 1, d.h. wenn vom Sender 2 das Schaltelement 3 geschlossen wird, ein Strom von der Stromquelle 8 über das Schaltelement 9, den ersten Kontakt 4, die erste Leitung **10** mit Schleifenwiderstand **RW**, das Schaltelement 3, die zweite Leitung **11** mit Schleifenwiderstand **RW**, den zweiten Kontakt 5 gegen Masse **12** fließt. Wenn ein solcher Strom fließt, geht der Ausgang des Schaltelements 9 auf den Signalpegel "low". Dieses Signal wird über ein als Tiefpassfilter ausgebildetes Filter **13** mit den Komponenten **RF**, **CF** an einen Inverter **14** weiter gegeben, so dass am Ausgangskontakt 7 der Schaltung 6 ein aufbereitetes und digitalisiertes Ausgangssignal mit dem Signalpegel "high" anliegt.

Ist dagegen das Schaltelement 3 senderseitig geöffnet, die Zweidrahtleitung 1 also nicht kurz geschlossen, fließt kein Strom durch das Schaltelement 9 in der Schaltung 6. Am Ausgang des Schaltelements 9 liegt der Signalpegel "high" und entsprechend am Ausgangskontakt 7 der Signalpegel "low" an. An dieser Stelle ist anzumerken, dass der Sender 2 stark vereinfacht dargestellt ist. Um die Schaltungsanordnung simulieren zu können, ist ein Rechteckwellengenerator **15** dargestellt, der alternierend ein Öffnen und Schließen des Schaltelements 3 auslöst. In der Praxis ist der Sender 2 beispielsweise als Teil einer Eisenbahnsignalisierung als Leiterplatte (Ausgangsboard) mit mehreren Relaiskontakten oder mit mehreren Open-Kollektor-Ausgängen ausgebildet.

Um den Einfluss einer parallel zur Zweidrahtleitung 1 geführten Zweidrahtleitung auf das Ausgangssignal der Schaltung 6 zu simulieren, ist in der Fig. 1 ein Wechselspannungsgenerator **16** dargestellt, dessen Wechselspannung über die Koppelkapazitäten **CK** in die Zweidrahtleitung 1 eingekoppelt wird. In der Praxis verlaufen mehrere Zweidrahtleitungen parallel zueinander, die paarweise miteinander verdrillt sind, insbesondere zwischen einem Sender und einem Empfänger. Eine in einer der Zweidrahtleitungen übertragene Wechselspannung kann in die Zweidrahtleitung 1 aufgrund einer Koppelkapazität CK eingekoppelt werden. Liegt der Mittelwert der eingekoppelten Wechselspannung bei offener Zweidrahtleitung 1 an der Stelle A unterhalb der Versorgungsspannung Vcc, kann die Stromquelle 8 aktiviert werden, was eine Änderung des Signalpegels am Ausgang des Schaltelements 9 bewirkt und folglich auch eine Änderung des Ausgangssignals am Ausgangskontakt 7. Das Ausgangssignal gibt daher nicht mehr den Schaltzustand des Schaltelements 3 im Sender 2 wieder und ist gestört.

Die Diode D2 bewirkt jedoch, dass bei offener Zweidrahtleitung 1 das Potential des Mittelwerts der eingekoppelten Wechselspannung an der Stelle A auf ein höheres, positiveres Potential verschoben wird, das insbesondere höher liegt als die positive Versorgungsspannung Vcc. Daher wird durch die eingekoppelte Wechselspannung die Stromquelle 8 nicht aktiviert und das Signal am Ausgang des Schaltelements 9 ebenso wenig wie das Ausgangssignal am Ausgangskontakt 7 verändert. Die Diode D1 schützt die Bauelemente der Schaltung 6 vor der eingekoppelten Wechselspannung, die in der Praxis nicht notwendigerweise sinusförmig ist.

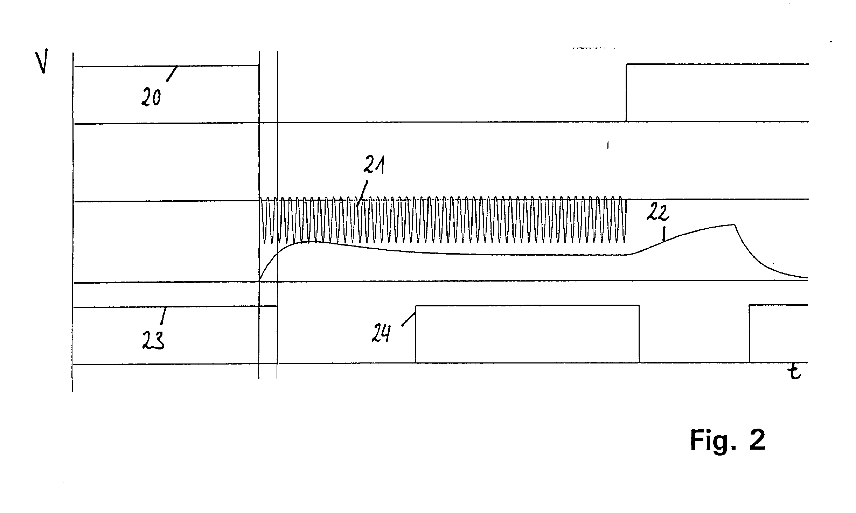

In der **Fig. 2** ist ein Simulationsergebnis der Stromsignalisierungsanordnung der Fig. 1 ohne die Dioden D1, D2 dargestellt. Dabei ist entlang der Ordinate die Spannung V und entlang der Abszisse die Zeit t aufgetragen. Das Signal **20** gibt den Schaltzustand wieder, wobei der Signalpegel "high" angibt, dass das Schaltelement 3 geschlossen, d.h. die Zweidrahtleitung 1 kurzgeschlossen ist. Das Signal **21** zeigt den Spannungsverlauf an der Stelle A in der Fig. 1. Solange die Zweidrahtleitung 1 kurzgeschlossen ist, wird dieser Punkt auf Masse gezogen, so dass keine nennenswerte Spannung vorhanden ist. Bei offener Zweidrahtleitung ist die eingekoppelte Wechselspannung detektierbar. Das Signal **22** gibt den Spannungsverlauf an der Stelle B in der Fig. 1 wieder, d.h. am Eingang des Inverters 14. Das Signal **23** stellt das Ausgangssignal der Schaltung 6 an der Stelle C dar. Bei ungestörter Zweidrahtleitung müsste es das Signal 20, abgesehen von geringen Zeitverzögerungen, widerspiegeln. In Der Fig. 2 ist jedoch erkennbar, dass aufgrund der eingekoppelten Wechselspannung das Signal 21 vorübergehend auf einen so geringen Signalpegel sinkt, dass sich das Signal 23 an der Stelle 24 ändert, obwohl das Signal 20 unverändert bleibt.

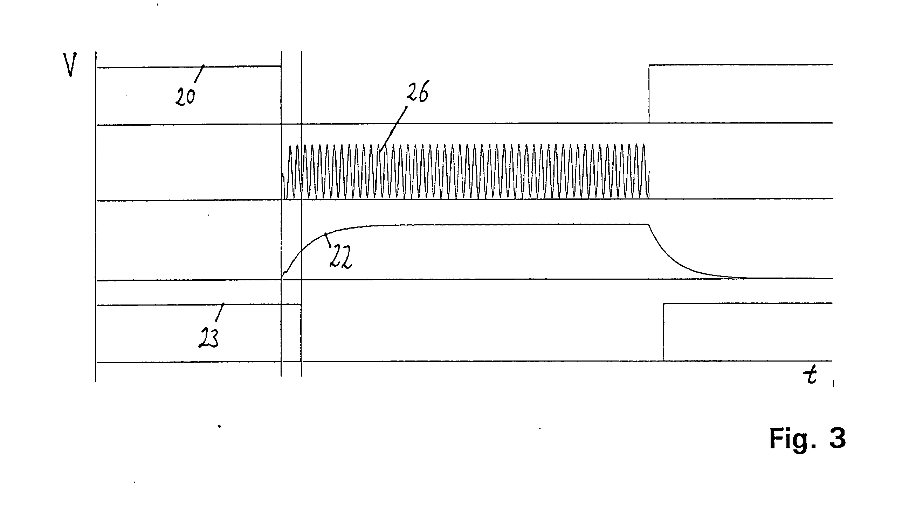

In der **Fig. 3** ist das Simulationsergebnis der Stromschleifensignalisierungsanordnung der Fig. 1 unter Berücksichtigung der Dioden D1, D2 dargestellt. Im Gegensatz zur Fig. 2 ist die eingekoppelte Wechselspannung **26** an der Stelle A, d.h. am Kontakt 4, zu einem höheren Potential verschoben, d.h. der Mittelwert der eingekoppelten Wechselspannung 26 wurde verschoben. Dies bewirkt, dass die Spannung an der Stelle B (Signal 22) auf einem hohen Niveau bleibt, solange die Zweidrahtleitung offen ist. Daher gibt das Ausgangssignal 23 fehlerfrei den Zustand des Schaltelements 3 wieder.

Eine an eine kurzschließbare Zweidrahtleitung (1) angeschlossene Schaltung (6) weist eine Potentialverschiebeeinrichtung auf, mit der das Potential des Mittelwerts einer in die Zweidrahtleitung (1) eingekoppelten Störwechselspannung auf ein anderes, insbesondere höheres Potential verschoben wird, so dass die Störwechselspannung keine Änderung des Ausgangssignals der Schaltung (6) bewirkt.

## Patentansprüche

1. Schaltung (6), die mindestens einen ersten und einen zweiten Kontakt (4, 5) zum Anschluss einer Zweidrahtleitung (1) aufweist, wobei der erste Kontakt (4) mit einer Spannungsversorgung (V_{cc}) verbunden ist und die Schaltung (6) einen Ausgangskontakt (7) für ein aufbereitetes digitalisiertes Ausgangssignal (23) aufweist, und mit einer Potentialverschiebungseinrichtung (D2),
**dadurch gekennzeichnet,**
**dass** die Potentialverschiebungseinrichtung (D2) zur Potentialerhöhung des Mittelwerts einer in die an die Schaltung (6) anschließbare Zweidrahtleitung (1) eingekoppelten Wechselspannung (26) zwischen dem ersten und zweiten Kontakt (4, 5) vorgesehen ist.

2. Schaltung nach Anspruch 1, **dadurch gekennzeichnet, dass** die Schaltung (6) als Eingangsstufe einer Zweidrahtleitung (1) ausgebildet ist.

3. Schaltung nach Anspruch 1, **dadurch gekennzeichnet, dass** die Potentialverschiebungseinrichtung als Diode (D2) ausgebildet ist.

4. Schaltung nach Anspruch 1, **dadurch gekennzeichnet, dass** die Schaltung (6) ein mit dem Ausgangskontakt (7) in Verbindung stehendes Schaltelement (9) aufweist.

5. Schaltung nach Anspruch 4, **dadurch gekennzeichnet, dass** das Schaltelement (9) als Optokoppler, Opto-Feldeffekttransistor, OptoThyristor oder Opto-Triac ausgebildet ist.

6. Schaltung nach Anspruch 4, **dadurch gekennzeichnet, dass** eine zweite Diode (D1) zwischen dem ersten Kontakt (4) und dem Schaltelement (9) angeordnet ist.

7. Schaltung nach Anspruch 4, **dadurch gekennzeichnet, dass** zwischen dem Schaltelement (9) und dem Ausgangskontakt (7) ein Filter (13), insbesondere ein Tiefpassfilter vorgesehen ist.

8. Schaltung nach Anspruch 1, **dadurch gekennzeichnet, dass** dem Ausgangskontakt (7) ein Inverter (14) vorgeschaltet ist.

9. Stromschleifensignalisierungsanordnung umfassend einen Sender (2) mit mindestens einem Schaltelement (3) und einer Schaltung nach Anspruch 1, die mit einer Zweidrahtleitung (1) verbunden sind, wobei die Potentialverschiebungseinrichtung das Potential des Mittelwerts einer in die Zweidrahtleitung (1) eingekoppelten Wechselspannung (26) derart verschiebt, dass ein Ausgangssignal (23) der Schaltung (6) durch die Wechselspannung (26) nicht gestört wird.

10. Verfahren zum störfesten Übertragen von Signalen über eine Zweidrahtleitung (1), bei dem das Potential des Mittelwerts einer in die Zweidrahtleitung (1) eingekoppelten, das Ausgangssignal (23) einer mit der Zweidrahtleitung (1) verbundenen Schaltung (6) störenden Wechselspannung mittels einer zwischen einem ersten und einem zweiten Kontakt (4,5) zum Anschluss der Zweidrahtleitung (1) der Schaltung (6) angeordneten Diode (D2) auf ein höheres Potential verschoben wird.

11. Verfahren nach Anspruch 10, **dadurch gekennzeichnet, dass** die potentialverschobene Wechselspannung (26) von der Schaltung (6) mittels einer weiteren Diode (D1) entkoppelt wird.

## Claims

1. Circuit (6), which has at least a first and a second contact (4, 5) for the connection of a two-wire circuit (1), in which the first contact (4) is connected to a power supply (V_{cc}) and the circuit (6) has an output contact (7) for a prepared digitalised output signal (23), with a level shifting device (D2),
**characterised in that**
the level shifting device (D2) is provided to increase the potential of the average value of an alternating voltage (26) between the first and second contact (4, 5), which is coupled into the two-wire circuit (1), which may be connected to the circuit (6).

2. Circuit according to claim 1, **characterised in that** the circuit (6) is made as an input stage of a two-wire circuit (1).

3. Circuit according to claim 1, **characterised in that** the level shifting device is made as a diode (D2).

4. Circuit according to claim 1, **characterised in that** the circuit (6) has a switch element (9), which is connected to the output contact (7).

5. Circuit according to claim 4, **characterised in that** the switch element (9) is made as an optocoupler, optical field effect transistor, optothyristor or optotriac.

6. Circuit according to claim 4, **characterised in that** a second diode (D1) is arranged between the first contact (4) and the switch element (9).

7. Circuit according to claim 4, **characterised in that** a filter (13), particularly a low pass filter, is provided between the switch element (9) and the output contact (7).

8. Circuit according to claim 1, **characterised in that** an inverter (14) is connected upstream of the output contact (7).

9. A current loop signalling arrangement comprising a transmitter (2) with at least one switch element (3) and a circuit (6) according to claim 1, which are connected to a two-wire circuit (1), in which the level shifting device shifts the potential of the average value of an alternating voltage (26), which is coupled into the two-wire circuit (1) in such a way that there is no interference of an output signal (23) of the circuit (6) through the alternating voltage (26).

10. Method for the interference-proof transfer of signals through a two-wire circuit (1), in which the potential of the average value of an alternating voltage, which is coupled into the two-wire circuit (1), causing interference to the output signal (23) of a circuit (6), which is connected to the two-wire circuit (1), is shifted to a higher potential by means of a diode (D2), which is arranged between a first and a second contact (4, 5) for the connection of the two-wire circuit (1) of the circuit (6).

11. Method according to claim 10, **characterised in that** the alternating voltage (26), the potential of which has been shifted, is decoupled from the circuit (6) by means of a further diode (D1).

## Revendications

1. Circuit (6) comprenant au moins un premier et un second contacts (4, 5) pour la connexion d'un circuit à deux fils (1), dans lequel le premier contact (4) est relié à une alimentation en courant (V_{cc}) et le circuit comprend un contact de sortie (7) pour délivrer un signal de sortie sous forme numérique, et avec un dispositif de décalage du potentiel (D2),**caractérisé en ce que**,le dispositif de décalage du potentiel (D2) est prévu pour augmenter le potentiel de la valeur moyenne d'une tension alternative (26) couplée entre les premier et second contacts (4,5) dans le circuit à deux fils (1) que l'on peut connecter au circuit (6).

2. Circuit selon la revendication 1, **caractérisé en ce que**, le circuit (6) est du type à étage d'entrée d'un circuit à deux fils (1).

3. Circuit selon la revendication 1, **caractérisé en ce que** le dispositif de décalage du potentiel se présente sous la forme d'une diode (D2).

4. Circuit selon la revendication 1, **caractérisé en ce que** le circuit (6) comprend un élément logique (9) stable relié au contact de sortie (7).

5. Circuit selon la revendication 4, **caractérisé en ce que** l'élément logique (9) est du type à coupleur optoélectronique, à transistor à effet de champ optique, à thyristor optique ou à thyristor triode bilatéral optique.

6. Circuit selon la revendication 4, **caractérisé en ce qu'**une seconde diode (D1) est placée entre le premier contact (4) et l'élément logique (9).

7. Circuit selon la revendication 4, **caractérisé en ce qu'**un filtre (13), en particulier un filtre passe-bas est prévu entre l'élément logique (9) et le contact de sortie (7).

8. Circuit selon la revendication 1, **caractérisé en ce qu'**un inverseur (14) est couplé en série au contact de sortie (7).

9. Dispositif destiné à signaliser une boucle de courant comportant un émetteur (2) ayant au moins un élément logique (3) et un circuit (6) selon la revendication 1, qui sont reliés à un circuit à deux fils (1), dans lequel le dispositif de décalage du potentiel décale le potentiel de la valeur moyenne d'une tension alternative couplée (26) dans le circuit à deux fils (1) de telle sorte qu'un signal de sortie (23) du circuit (6) n'est pas perturbé par la tension alternative (26).

10. Procédé destiné à transmettre sans perturbation des signaux sur un circuit à deux fils (1), selon lequel le potentiel de la valeur moyenne d'une tension alternative, ladite tension étant couplée dans le circuit à deux fils (1) et perturbant le signal de sortie (23) d'un circuit (6) relié au circuit à deux fils (1), est décalé au moyen d'une diode (D2) placée entre un premier et un second contacts (4, 5) afin de connecter le circuit à deux fils (1) du circuit (6) sur un potentiel plus élevé.

11. Procédé selon la revendication 10, **caractérisé en ce que** la tension alternative (26) à potentiel décalé est découplée par le circuit (6) au moyen d'une autre diode (D1) .
